# EUROPEAN PATENT APPLICATION

(11) **EP 4 039 142 A1**
(43) Date of publication of application: **10.08.2022**
(21) Application number: 21155767.3
(22) Date of filing: 08.02.2021
(51) Int. Cl.: A47J 45/07

(54) **COMBINATION COMPONENT FOR ROTATIONAL COMBINATION, HANDLE, HOUSEHOLD APPLIANCE AND METHOD**

(71) Applicant: BSH Hausgeräte GmbH, 81739 München (DE)
(72) Inventor: Koscak, Ales, 6230 Postojna (SI); Miklavcic, Jure, 1230 Domzale (DE); Vede, Tjasa, 1000 Ljubljana (SI)

(57) **Abstract**

Disclosed is a combination component 100, 100' of a household appliance. The combination component comprises a combination unit 20 and a handle 10, 10'. The combination unit 20 is configured to be detachably combined with a further component 200 of the household appliance by in particular rotating the combination unit 20 relative to the further component about a designated rotational axis X for combination. The handle 10, 10' is attached to the combination unit 20 and moveable at least between a use position and a provision position, in which a protrusion of the handle from the combination unit is minimised. The handle is configured to transmit, in the use position, a rotation about said of rotational axis X for combination to the combination unit 20.

Further disclosed are such handle 10, 10', a method for upgrading a combination unit, and a household appliance comprising such combination component 100, 100'.

## Description

The present invention concerns a combination component of a household appliance, a handle for such combination component, a method for upgrading a combination unit of a household component, and a household appliance comprising a combination component and a further component configured to combined with the combination component.

Household appliances often comprise two or more components which are to be combined which each other for use of the household appliance. Therein, the combination may comprise a rotation, e.g., for realising a screw connection or a bayonet connection of a combination unit and a further component of the respective household appliance. Both the combination unit and the further component have to provide of a respective contact surface to be grasped by a user applying the rotation. While minimising the area to be grasped may be desirable in order to make the combination means and, therewith, the household appliance more compact, it may entail a more difficult handling of the combination unit with regard to said combination by rotation.

It is an object of the present invention to provide a technique facilitating both a compact design of the means for combining two components of a household appliance, and a convenient handling of such combination.

The object is achieved by a combination component according to claim 1, a handle according to claim 9, a method according to claim 10, and a household appliance according to claim 11. Preferred embodiments are disclosed in the dependent claims, the description and the figures.

A combination component according to the present invention is a component of a household appliance and comprises a combination unit and a handle. The combination unit is configured to be detachably combined with a further component of the household appliance by in particular rotating the combination unit relative to the further component and about a designated axis or rotation. In the following, said axis of rotation is referred to as the "rotational axis for combination".

The handle is attached to the combination unit and moveable (relative to the combination unit) at least between a use position and a provision position. That is, the handle can be transferred, by a handle movement relative to the combination unit, from each one of said positions to the other one. Therein, said handle movement may comprise a linear shift of the handle (relative to the combination unit), such as a linear shift parallel to (in particular: along) said rotational axis for combination. Additionally or alternatively, said handle movement may comprise a rotation about a pivot axis, which preferably is different from (in particular: orthogonal to) said rotational axis for combination.

In the use position, the handle at least partially sticks out of the combination unit, such that it can be gripped by a user. In the provision position, a protrusion of the handle from the combination unit is minimised (as compared to other positions achievable by the handle).

Moreover, the handle is configured to transmit, at least in the use position, a rotation about said rotational axis for combination to the combination unit. That is, a user can rotate the combination unit about said rotational axis for combination (and in particular combine or separate the combination component and the further component) by grasping the handle and rotating it accordingly.

A combination component according to the present invention thus is a subassembly which advantageously facilitates both a compact design of a combination component, and a convenient handling when combining it with or separating it from a further component of a household appliance. In particular, as the handle sticks out from the combination unit in the use position, it can be conveniently and easily grasped, and a reduced effort is needed to rotate the combination component relative to the further component for combining and/or for separating said components.

According to preferred embodiments, in the provision position, the handle at least partially extends flatly along a surface of the combination unit and/or is at least partially arranged within a depression formed in the combination unit. Thereby, a dimension of the combination component can be further reduced.

A handle according to the present invention is configured to be attached to a combination unit of a household appliance, so as to be moveable relative to the combination unit, and to thereby form a combination component according to an embodiment of the present invention. In particular, the handle preferably is configured to hold a rotational force respectively needed for combining and/or separating the combination component with/from the further component. Thus attached to the combination unit, the handle is configured to transmit a rotation about a designated rotational axis for combination to the combination unit.

A method according to the present invention serves to upgrade a combination unit (of a household appliance) being configured to be detachably combined with a further component (of the household appliance) by rotating the combination unit relative to the further component about a designated rotational axis for combination. The method comprises movably attaching a handle according to an embodiment of the present invention to the combination unit. Thereby, a combination component according to an embodiment of the present invention is formed.

A household appliance according to the present invention comprises a combination component according to an embodiment of the present invention, and a further component configured to be combined with the combination component by way of a combination movement (of the combination component and the further component relative to each other). Therein, the combination movement comprises a rotation about a designated rotational axis for combination.

According to preferred embodiments of the present invention, the rotational axis for combination is determined by a shape of the combination unit (comprised by the combination component, or configured to be upgraded by way of a method according to the present invention, respectively). For example, the combination unit may have a screw thread, an element of a bayonet connection, and/or another joint portion configured to engage with a respective part of the further component to provide for the detachable combination and determining, by their respective shape, said rotational axis for combination.

The handle may be attached/ configured to be attached to the combination unit by means of at least one hinge. In particular, the handle may comprise a hinge element configured to engage with a respective hinge part of the combination unit, so as to realise the attachment of the handle to the combination unit.

In particular, said hinge may comprise a pivot pin (in particular, a trunnion) arranged in the combination unit and engaging into an opening or depression possibly formed in the handle. Additionally or alternatively, such hinge may comprise a pivot pin (in particular, a trunnion), which may be comprised by the handle and which may engage into a opening or depression of the combination unit. In said embodiments, the opening or depression (in the handle and/or in the combination unit, respectively) may be shaped circularly or elongated (so as to allow a linear shift in the movement of the handle relative to the combination unit).

With respect to such handle, a method according to the present invention may comprise inserting the respective pivot pin into the respective opening or depression. Moreover, the method may comprise arranging the respective opening or depression in the combination unit, and/or fixing the respective pivot pin to the combination unit.

According to the present invention, the handle may be shaped reflectionally symmetric with respect to a plane extending along said rotational axis for combination X. In respective embodiments, said plane may extend orthogonally to said pivot axis about which the handle may be pivotable relative to the combination unit as mentioned above.

Additionally or alternatively, the handle may be shaped rotationally symmetric with respect to a rotation about 180° about said rotational axis for combination.

By such symmetries, an advantageous uniform transmission of a rotational force applied to the handle to combine or separate the combination component and the further component can achieved.

According to advantageous embodiments of the present invention, the handle is attached to the combination unit at two points located diametrically opposite to each other with respect to the rotational axis for combination. Thereby, a particularly advantageous transmission of rotational force from the handle to the combination unit is facilitated. In respective embodiments comprising a hinge as mentioned above, at least one such hinge may be arranged at a respective one of said two points.

In particular, the handle may be shaped as a clamp. In respective embodiments, on its opposite ends, such clamp may comprise respective hinge elements (such as a pivot pin and/or a opening or depression) as mentioned above.

The handle may advantageously comprise at least one one socket configured to at least partially encompass a portion of the combination unit when the handle is in the use position. In particular, the socket may form a hole configured to receive said portion of the combination unit. Thereby, an improved and stable transmission of a rotational force respectively needed for combining and/or separating the combination component and the further component can be achieved.

In embodiments where the handle movement (relative to the combination unit) transferring the handle from the provision position to its use position and/or vice versa comprises a linear shift of the handle (relative to the combination unit) as mentioned above, such linear shift may effect an insertion of said portion into the socket (in particular, into said hole).

In such case, the respective hole formed by the at least one socket may preferably be delimited by a surface which in the use position of the handle at least partially abuts against a surface of said portion. In particular, the socket may abut against opposite surfaces of said portion of the combination unit, wherein said opposite surfaces may face in circumferential direction (with different signs) with regard to the rotational axis for combination. As a particular example, such hole may have a shape conforming to a shape of said portion.

Additionally or alternatively to said at least one socket, the handle may preferably comprise at least one carrier pin configured to abut, in the use position of the handle, against a surface of the combination unit. In particular, such surface may define a recess of the combination unit into which the carrier pin may be configured to engage. In such embodiments, the carrier pin may serve to reliably and robustly ensure a transmission of a rotational force respectively needed for combining and/or separating the combination component and the further component.

According to advantageous embodiments of the present invention, the household appliance may comprise a kitchen appliance. In particular, it may comprise an electric blender, a mixer, a mill and/or a frother, for instance. The further component may comprise a jug element, in particular a jug element which together with the combination unit (when combined therewith) forms a receptacle, such as a receptacle having a surface of the combination unit as at least a portion of its ground.

In particular, the combination component may comprise a knife holder of a household appliance comprising an electric blender.

The combination unit may comprise a shaft with a clutch element to be combined with a mating clutch element. In particular, such a mating clutch element may be comprised by a base (of the household appliance) the combination component may be configured to be mounted on. A tool (such as a knife assembly or an agitator, for example) possibly comprised by the combination unit and fixed or fixable to the shaft may thus be configured to be driven by running the mating clutch element, such as by means of an electric motor the base may comprise. In its use position (for combining the combination component with the further component), the handle may then block the clutch element of the combination unit. In its provision position, the handle preferably unblocks the clutch element, so as to facilitate the mounting of the combination component onto the base.

In particular, said shaft may be rotatable about said rotational axis for combination. In such embodiments, the axis of rotation of the shaft thus coincides with the rotational axis for combination with the further component.

According to advantageous embodiments, the combination unit and/or the handle is/are at least partially made of plastics.

In the following, advantageous embodiments of the present invention are explained with respect to the accompanying drawings. As is to be understood, the various elements and components are depicted as examples only, may be facultative and/or combined in a manner different than that depicted. Reference signs for related elements are used comprehensively and not defined again for each figure.

Shown is schematically in
Fig. 1: an exemplary embodiment of a handle according to the present invention in a perspective view;
Fig. 2a an exemplary embodiment of a combination component according to the present invention with the handle in an intermediate position;
Fig. 2b the combination component of Figure 2a with the handle in a use position;
Fig. 3: a further exemplary embodiment of a handle according to the present invention;
Fig. 4a: an exemplary embodiment of a combination component according to the present invention, combined with a further component and with the handle in a provision position; and
Fig. 4b: the combination component of Figure 4a with the handle in a use position.

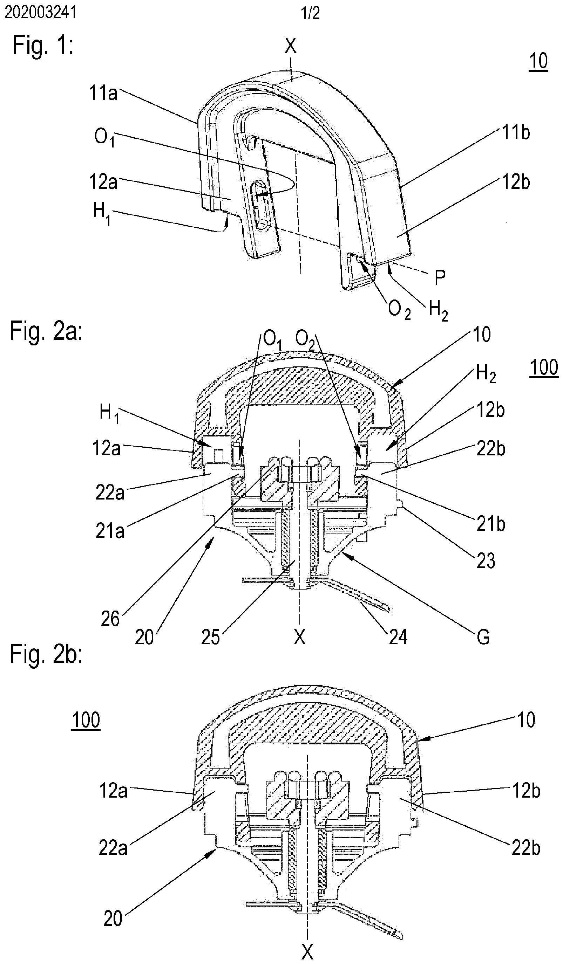

In Figure 1, a handle 10 according to an exemplary embodiment of the present invention is shown. The handle 10 is configured to be movably attached to a combination unit 20 of a household appliance and to thus form a combination component 100 according to an embodiment of the present invention, as depicted in Figures 2a, 2b.

The handle 10 in this embodiment is shaped as a clamp, with clamp arms 11a, 11b. In particular, the handle 10 is rotationally symmetric with respect to a rotation of 180° about said rotational axis for combination X, and the handle 10 is also reflectionally symmetric with respect to a plane extending along said rotational axis for combination X and orthogonal to said pivot axis P.

Attaching the handle 10 to the combination unit 20 is facilitated by openings O₁, O₂ arranged in the handle 10 and configured to receive respective pivot pins 21a, 21b of the combination unit 20, thus forming respective hinges.

Thereby, the handle 10 is pivotable from a (not shown) provision position (in which a protrusion of the handle 10 from the combination unit 20 is minimised) about the pivot pins 21a, 21b (and, therewith, about a pivot axis P) into an intermediate position depicted in Figure 2a.

The openings O₁, O₂ of the handle 10 both are longitudinally shaped. As a consequence, when the handle 10 is in said intermediate position shown in Figure 2a, it can be pushed towards the combination unit 20 and thereby linearly shifted (parallel to the rotational axis X for combination) into the use position of the handle 10, which use position is depicted in Figure 2b.

The clamp arms 11a, 11b of the handle 10 each comprise a socket 12a, 12b forming a respective hole H₁, H₂, as best seen in the cross sections of Figures 2a, 2b. The sockets 12a, 12b both are configured to encompass, in said use position depicted in Figure 2b, a respective portion 22a, 22b of the combination component 20. Therein, each socket 12a, 12b in particular embraces a respective one of the portions 22a, 22b in circumferential direction (not visible in the figures), thereby preferably abutting against opposite surfaces (facing in circumferential direction with different signs) of the respective portion 22a, 22b. As a consequence, when a rotational force about the rotational axis X for combination is applied to the handle 10, the rotation is transmitted to the combination unit 20. The insertion of the portions 22a, 22b into a respective one of holes H₁, H₂ is accomplished by said linear shift of the handle 10 relative to the combination unit 20.

The exemplary embodiment of a combination component 100 shown in Figures 2a, 2b, is a knife holder of an electric blender, which is configured to be combined, by rotation about the rotational axis X for combination and using a screw thread 23, with a further component (not shown) being a jug element.

Such combined, a surface G of the combination unit 20 will complement the jug element at its bottom, thus forming at least a portion of a ground of a receptacle (namely, of a jug, not shown). Figures 2a, 2b show the combination component 100 (knife holder) upside down with regard to an orientation devised for utilisation of the blender. That is, in said figures, the surface G and a knife assembly 24 comprised by the combination unit 20 face downwards.

The knife assembly 24 is fixed to a shaft 25 rotatable about an axis of rotation which in the present case coincides with the rotational axis X for combination.

To drive the knife assembly 24, the combination component 100 is to be mounted (preferably when combined with the jug element) on a base unit (not shown), which may comprise an electric motor and which preferably includes a clutch element mating with clutch element 26 of the combination unit 20, i.e., configured to engage with said clutch element 26. To facilitate the mounting of the combination component 100, the handle 10 thereof is to be moved away from the positions shown in Figures 2a, 2b, such as into the provision position (relative to the combination unit; not shown), in which the handle unblocks the clutch element 26.

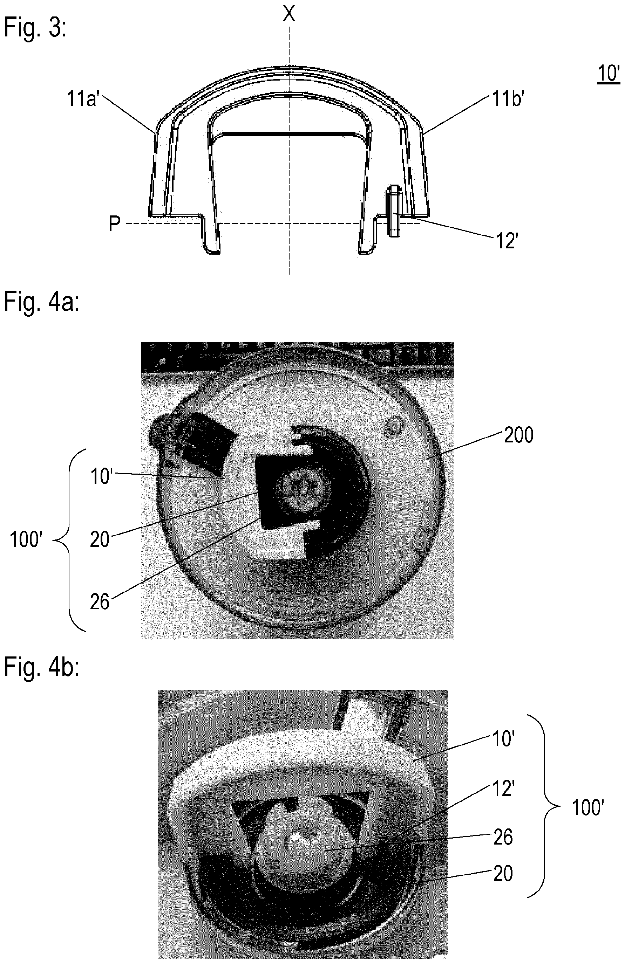

In Figure 3, a further exemplary embodiment of a handle 10' according to the present invention is shown in a side view. As the handle 10 shown in Figure 1 and described above, also the handle 10' is shaped as a clamp (having two clamp arms11a', 11b') and configured to be attached to a combination unit (such as combination unit 20 shown in Figures 2a, 2b) by insertion of respective pivot pins arranged in the combination unit into openings provided in the handle 10' (not visible in the perspective of Figure 3). Thereby, respective hinges are formed diametrically opposed to each other with respect to said rotational axis X for combination.

The handle 10' shown in Figure 3 comprises a carrier pin 12', which is configured to abut against a surface of a combination unit 20 when the handle 10' is combined therewith and in its use position. The carrier pin 12' thereby provides for a transmission of rotational force (applied to the handle) to the combination component.

According to a further embodiment (not shown), the handle may comprise at least one further carrier pin, preferably arranged on another one of its clamp arms. Such further carrier pin may be arranged on a same surface (i.e., so as to face a same side) of the handle as the (first) carrier pin. In particular, the handle may be shaped reflectionally symmetric with respect to a plane extending along said rotational axis for combination X and orthogonally to the pivot axis P. Thereby, a stability of the handle for transmission of rotational force in both (opposite) directions about the rotational axis for combination can be improved.

In Figure 4a, a combination component 100' comprising such handle 10' attached to a combination unit 20 is shown. Therein, the combination component 100' is combined with a further component 200 being a jug element.

In the state depicted in Figure 4a, the handle is in its provision position, in which it extends flatly along a surface of the combination unit 20. Thereby, a protrusion of the handle 10' from the combination unit 20 is minimised. In this position, the handle unblocks the clutch element 26 of the combination unit, such that the combination component 100' (preferably combined with the further component 200) can be mounted on a base of the household appliance (not shown), the base comprising a mating clutch element.

In Figure 4b, the combination component 100' is depicted with its handle 10' in the use position thereof, in which a protrusion of the handle 10' from the combination unit 20 is maximised. In this use position, the handle 10' blocks the clutch element 26. Moreover, the carrier pin 12' abuts against a surface of the combination unit 20 and thus serves to transmit rotational force when this is applied to the handle 10' for combining the combination component 100' with the further component 200 or for detaching the combination component 100' from the further component 200.

Disclosed is a combination component 100, 100' of a household appliance. The combination component comprises a combination unit 20 and a handle 10, 10'. The combination unit 20 is configured to be detachably combined with a further component 200 of the household appliance by in particular rotating the combination unit 20 relative to the further component and about a designated rotational axis X for combination. The handle 10, 10' is attached to the combination unit 20 and moveable at least between a use position and a provision position, in which a protrusion of the handle from the combination unit is minimised. The handle is configured to transmit, in the use position, a rotation about said rotational axis X for combination to the combination unit 20.

Further disclosed are such handle 10, 10', a method for upgrading a combination unit, and a household appliance comprising such combination component 100, 100'.

### Reference signs

- 10, 10': handle
- 11a, 11b, 11a', 11b': clamp arms
- 12a, 12b: socket
- 12': carrier pin

- 20: combination unit
- 21a, 21b: pivot pin
- 22a, 22b: portion of combination unit 20
- 23: screw thread
- 24: knife assembly
- 25: shaft
- 26: clutch element

- 100, 100': combination component
- 200: further component

- G: surface of combination unit 20
- H₁, H₂: hole in handle 10
- O₁, O₂: opening in handle 10, 10'
- P: pivot axis
- X: rotational axis for combination

## Claims

1. Combination component (100, 100') of a household appliance, the combination component comprising a combination unit (20) and a handle (10, 10'),
wherein the combination unit (20) is configured to be detachably combined with a further component (200) of the household appliance by in particular rotating the combination unit (20) relative to the further component (200) about a designated rotational axis (X) for combination,
wherein the handle (10, 10') is attached to the combination unit (20) and moveable at least between a use position, in which the handle (10, 10') at least partially sticks out of the combination unit (20), and a provision position, in which a protrusion of the handle (10, 10') from the combination unit (20) is minimised,
and wherein the handle (10, 10') is configured to transmit, in the use position, a rotation about said rotational axis (X) for combination to the combination unit (20).

2. Combination component according to claim 1, wherein the handle (10, 10') is configured to be moved from the provision position to the use position by way of a movement comprising
- a rotation of the handle (10, 10') relative to the combination unit (20) and about a pivot axis (P) different from said rotational axis (X) for combination; and/or
- a linear shift of the handle (10, 10') relative to the combination unit (20) and parallel to said rotational axis (X) for combination.

3. Combination component according to one of claims 1 or 2, wherein the handle (10, 10') is attached to the combination unit (20) by means of at least one hinge comprising
- a pivot pin (21a, 21b) arranged in the combination unit (20) and engaging into an opening (O₁, O₂) or depression of the handle (10) and/or
- a pivot pin arranged in the handle and engaging into an opening or depression of the combination unit.

4. Combination component according to one of the preceding claims, wherein the handle (10, 10') is attached to the combination unit (20) at two positions located diametrically opposite to each other with respect to the rotational axis (X) for combination.

5. Combination component according to one of the preceding claims, wherein the handle (10) comprises at least one socket (12a, 12b) configured to at least partially encompass, in the use position of the handle, a portion (22a, 22b) of the combination unit (20).

6. Combination component according to one of the preceding claims, wherein the handle (10') comprises at least one carrier pin (12') configured to abut, in the use position of the handle, against a surface of the combination unit (20).

7. Combination component according to one of the preceding claims, wherein the combination unit (20) comprises a shaft (25) with a clutch element (26) to be combined with a mating clutch element of a base of the household component, wherein the shaft (25) is rotatable about said rotational axis (X) for combination.

8. Combination component according to one of the preceding claims, wherein the combination component (100, 100') comprises a knife holder of the household appliance.

9. Handle (10, 10') configured to be movably attached to a combination unit (20) of a household appliance and to therewith form a combination component (100, 100') according to one of the preceding claims.

10. Method for upgrading a combination unit (20) of a household appliance, the combination unit (20) configured to be detachably combined with a further component (200) of the household appliance by in particular rotating the combination unit (20) relative to the further component (200) about a rotational axis (X) for combination,
the method comprising attaching a handle (10, 10') according to claim 9 to the combination unit (20).

11. Household appliance comprising a combination component (100, 100') according to one of claims 1 to 8, and a further component (200) configured to be combined with the combination component.
